# EUROPEAN PATENT APPLICATION

(11) **EP 4 700 875 A1**
(43) Date of publication of application: **25.02.2026**
(21) Application number: 24770658.3
(22) Date of filing: 06.03.2024
(51) Int. Cl.: H01M 10/04, H01M 6/02, H01M 10/0587, H01M 50/531

(54) **BATTERY**

(30) Priority: 15.03.2023 JP 2023040666
(71) Applicant: Panasonic Energy Co., Ltd., Osaka 570-8511 (JP)
(72) Inventor: TANIGUCHI, Hiroki, Kadoma-shi, Osaka 571-0057 (JP); OKUNO, Morihiko, Kadoma-shi, Osaka 571-0057 (JP)
(74) Representative: Eisenführ Speiser
(86) International application number: PCT/JP2024/008437
(87) International publication number: WO 2024/190548

(57) **Abstract**

A battery according to an embodiment comprises: an electrode group in which a band-like positive electrode plate (11) and a band-like negative electrode plate are wound with a separator therebetween; an electrolyte; and an outer can. The positive electrode plate (11), in which a positive electrode mix layer (31) is formed on a band-like positive electrode core (30), comprises: a positive electrode tab (20) which is connected to an area on one end side of the positive electrode core (30) and not extending beyond the center in the width direction of the positive electrode plate (11); and a dummy tab (37) which is connected to an area on the other end side of the positive electrode core (30) and not extending beyond the center in the width direction of the positive electrode plate (11). When the positive electrode plate (11) is viewed in the width direction, the dummy tab (37) is disposed to overlap at least a part of the positive electrode tab (20).

## Description

### TECHNICAL FIELD

The present disclosure relates to a battery comprising an electrode group in which a band-shaped positive electrode plate and a band-shaped negative electrode plate are wound with a separator interposed between the positive electrode plate and the negative electrode plate, an electrolyte, and an outer housing can.

### BACKGROUND ART

Recent spread of electric automobiles and smart devices such as smartphones increases a demand for batteries having high energy density. On the other hand, contrary to an increase in energy density, a risk of impairing the safety may be induced. For example, if an impact or stress is applied from the outside to the battery, a battery is deformed, and a current collecting tab or an electrode plate pierces a separator or the like in the battery, which may cause an internal short-circuit. Therefore, the risk induced in the battery having high energy density tends to become greater than that induced in the battery having low energy density.

PATENT LITERATURE 1 discloses a battery whose objective is to prevent winding deviation of an electrode group. In the battery disclosed in PATENT LITERATURE 1, a peeling portion of a mixture having a width corresponding to 1/3 to 1/2 of a positive electrode width is formed inward from an upper side of a positive electrode plate, a lead plate (current collecting tab) is connected to the peeling portion, and an insulating tape is stuck to a surface formed by the lead plate and the peeling portion. In addition, on a surface of the electrode plate on a lower side of the insulating tape, another insulating tape is stuck inward from a lower side of the positive electrode plate, and an exposed portion of a positive electrode mixture exposed from the insulating tapes on upper and lower sides is provided between the insulating tapes. This makes it possible for the thicknesses of the upper and lower side portions of the positive electrode plate to be substantially equal to each other even when the lead plate is connected to the positive electrode plate, which can prevent the winding deviation of the electrode group.

### CITATION LIST

### PATENT LITERATURE

PATENT LITERATURE 1: Japanese Unexamined Patent Application Publication No. Hei 8-7877

### SUMMARY

As described above, in order to prevent the current collecting tab from piercing the separator or the like in the battery even when the impact or stress is applied from the outside to the battery, it is conceivable that the safety is improved by excluding the current collecting tab from a center portion of the electrode group of the battery in the up-down direction. For example, it is conceivable that, as in the configuration illustrated in FIG. 1 of PATENT LITERATURE 1, the current collecting tab connected to one side of the positive electrode plate in the width direction is shortened so that the current collecting tab does not exceed a center of the positive electrode plate in the width direction. In this battery, the current collecting tab can be easily excluded from the vicinity of the center of the electrode group in a winding axis direction, where the electrode group tends to be deformed, whereby the battery has a possibility that the safety can be improved.

On the other hand, the configuration disclosed in PATENT LITERATURE 1 has a possibility that the non-uniformity of the thickness between both sides of the positive electrode plate in the width direction can be reduced, but has room for an improvement from the standpoint of reducing the non-uniformity of the rigidity between both sides of the positive electrode plate in the width direction. Accordingly, there is still room for an improvement from the standpoint of reducing the "winding deviation" in which the winding direction of the positive electrode plate is inclined with respect to the winding axis direction when the electrode group is formed. In a case where a winding deviation defect occurs during manufacturing of a battery, the battery is treated as a defective product, which causes the yield during manufacturing of the battery to be deteriorated. Although the inconvenience when the short current collecting tab is connected to the positive electrode plate has been described above, the similar inconvenience may arise even when the short current collecting tab is connected to the negative electrode plate. Therefore, there is room for an improvement from the standpoint of efficiently producing the battery with improved safety.

A battery according to the present disclosure is a battery comprising an electrode group in which a band-shaped positive electrode plate and a band-shaped negative electrode plate are wound with a separator interposed between the positive electrode plate and the negative electrode plate, an electrolyte, and an outer housing can, in which at least one electrode plate of the positive electrode plate and the negative electrode plate has a mixture layer formed on a band-shaped electrode core and includes, in a width direction of the electrode plate corresponding to a winding axis direction of the electrode group, a current collecting tab connected to one end side of the electrode core and within a range that does not exceed a center of the electrode plate, and a dummy tab connected to the other end side of the electrode core and within a range that does not exceed the center of the electrode plate, and the dummy tab is disposed to overlap with at least a part of the current collecting tab when the electrode plate is viewed in the width direction.

According to the battery according to the present disclosure, it is possible to exclude a current collecting tab of at least one electrode plate of the positive electrode plate and the negative electrode plate from a vicinity of the center of the electrode group in the winding axis direction and reduce both of the non-uniformity of the thickness and the non-uniformity of the rigidity between both end sides of the electrode plate in the width direction. This makes it possible to reduce the winding deviation during formation of the electrode group. Therefore, the yield of the battery can be prevented from being deteriorated, so that the battery with improved safety can be more efficiently produced.

### BRIEF DESCRIPTION OF DRAWING

FIG. 1 is a sectional view of a battery, which is one example of an embodiment.
FIG. 2 is a perspective view of an electrode group included in the battery, which is an example of an embodiment.
FIG. 3 is a front view of a positive electrode plate included in the electrode group illustrated in FIG. 2, the front view illustrating a positive electrode tab and its vicinity.
FIG. 4 is an enlarged view of a longitudinal center portion of the positive electrode plate illustrated in FIG. 3, in which a tape is not illustrated.

### DESCRIPTION OF EMBODIMENTS

Hereinafter, one example of an embodiment of a battery according to the present disclosure will be described in detail with reference to the drawings. The embodiment described below is only an example, and the present disclosure is not limited to the embodiment described below. Forms obtained by selectively combining each component of the embodiment described below are included in the present disclosure.

Hereinafter, a cylindrical battery 10 in which a wound-type electrode group 14 is housed in a bottomed cylindrical outer housing can 16 is illustrated as the battery, but an outer housing body of the battery is not limited to the cylindrical outer housing can. The battery according to the present disclosure may be, for example, a prismatic battery comprising a rectangular outer housing can, or a pouch type battery comprising an outer housing body formed of a laminate sheet including a metal layer and a resin layer. Note that the battery 10 of the present embodiment is a secondary battery, but the battery according to the present disclosure can be applied to a configuration other than the secondary battery, such as a primary battery.

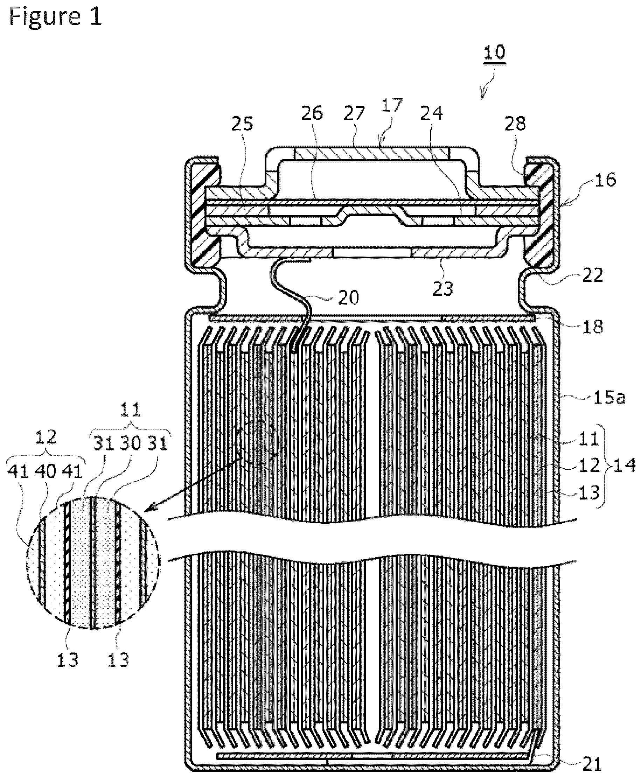

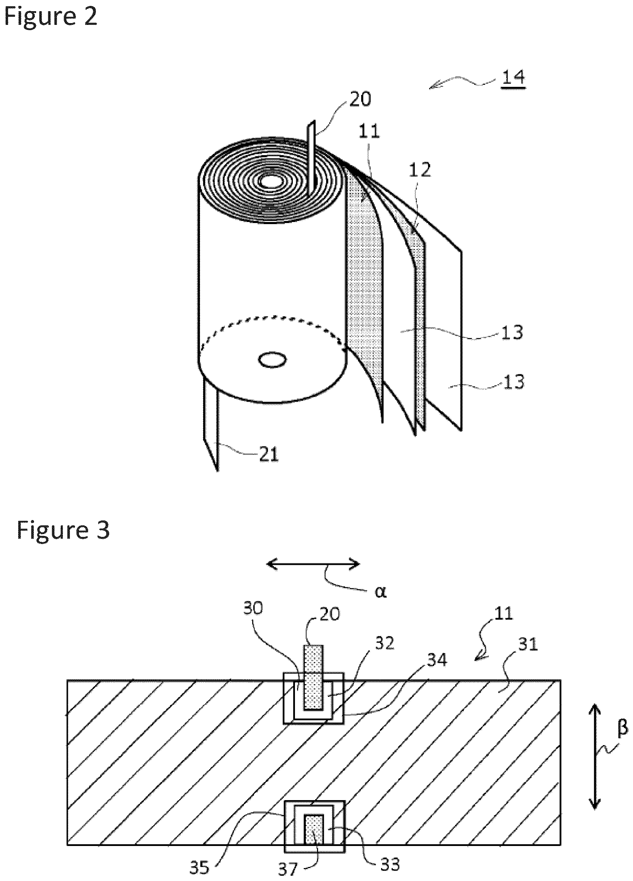

FIG. 1 is a diagram schematically illustrating an axial cross section of the battery 10, which is one example of the embodiment. FIG. 2 is a perspective view of the electrode group 14 included in the battery 10. As illustrated in FIG. 1, the cylindrical battery 10 comprises the electrode group 14, an electrolyte, and the outer housing can 16 that houses the electrode group 14 and the electrolyte. The electrode group 14 has a positive electrode plate 11, a negative electrode plate 12, and a separator 13, and has a wound structure in which the positive electrode plate 11 and the negative electrode plate 12 are spirally wound with the separator 13 interposed therebetween. Each of the positive electrode plate 11 and the negative electrode plate 12 corresponds to an electrode plate. The outer housing can 16 is a bottomed cylindrical metallic container in which one side in an axial direction is open, and an opening of the outer housing can 16 is closed by a sealing assembly 17. Hereinafter, for convenience of description, the sealing assembly 17 side of the cylindrical battery 10 will be described as an "upper side", and a bottom side of the outer housing can 16 will be described as a "lower side".

The electrolyte may be an aqueous electrolyte, but a non-aqueous electrolyte shall be used in the present embodiment. The non-aqueous electrolyte includes a non-aqueous solvent, and an electrolyte salt dissolved in the non-aqueous solvent. For the non-aqueous solvent, esters, ethers, nitriles, amides, and mixed solvents containing two or more selected from the foregoing may be used, for example. Examples of non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate) obtained by substituting at least some of hydrogen atoms in these solvents with a halogen atom such as fluorine. As the electrolyte salt, a lithium salt such as LiPF₆ is used.

As illustrated in FIG. 2, the positive electrode plate 11, the negative electrode plate 12, and the separator 13 included in the electrode group 14 are all band-shaped elongated members, and are spirally wound to be stacked in the radial direction of the electrode group 14. The negative electrode plate 12 is formed to be one size larger than the positive electrode plate 11 in order to prevent deposition of lithium. That is, the negative electrode plate 12 is formed to be longer in the longitudinal direction and the width direction (short direction) than the positive electrode plate 11. The two separators 13 are each formed to be at least one size larger than the positive electrode plate 11, and are disposed so as to interpose the positive electrode plate 11 therebetween.

The positive electrode plate 11 has a positive electrode core 30 and a positive electrode mixture layer 31 formed on each surface of the positive electrode core 30. Specifically, the positive electrode plate 11 has a positive electrode mixture layer 31 formed on each surface of the positive electrode core 30. The positive electrode core 30 corresponds to an electrode core. For the positive electrode core 30, a foil of a metal, such as aluminum or an aluminum alloy, which is stable within a potential range of the positive electrode plate 11, a film in which such a metal is disposed on a surface layer thereof, and the like may be used. The positive electrode mixture layer 31 includes a positive electrode active material, a conductive agent such as carbon black, or a carbon nanotube, and a binder such as polyvinylidene fluoride, and is preferably formed on each surface of the positive electrode core 30 except for an exposed portion 32, 33 (see FIG. 3) to be described later. The positive electrode plate 11 may be produced by: applying a positive electrode mixture slurry including the positive electrode active material, the conductive agent, and the binder on each surface of the positive electrode core 30; and compressing the resulting coating film.

Examples of the positive electrode active material included in the positive electrode mixture layer 31 include a lithium-transition metal composite oxide. The lithium-transition metal composite oxide is a composite oxide containing metal elements such as Co, Mn, Ni, and Al in addition to Li. A metal element contained in the composite oxide is, for example, at least one selected from Mg, Al, Ca, Sc, Ti, V, Cr, Mn, Fe, Co, Ni, Cu, Zn, Ga, Ge, Y, Zr, Sn, Sb, W, Pb, and Bi. Among these elements, at least one selected from Ni, Mn, and Co is preferably contained.

The negative electrode plate 12 has a negative electrode core 40 and a negative electrode mixture layer 41 formed on each surface of the negative electrode core 40. Specifically, the negative electrode plate 12 has a negative electrode mixture layer 41 formed on each surface of the negative electrode core 40. The negative electrode core 40 corresponds to an electrode core. For the negative electrode core 40, a foil of a metal, such as copper or a copper alloy, which is stable within a potential range of the negative electrode plate 12, a film in which such a metal is disposed on a surface layer thereof, and the like may be used. The negative electrode mixture layer 41 includes a negative electrode active material, a binder, and, as necessary, a conductive agent such as carbon black or a carbon nanotube, and is preferably formed on each surface of the negative electrode core 40 excluding an exposed portion (not illustrated) for joining a negative electrode tab 21, which will be described later. For the binder, for example, a styrenebutadiene rubber (SBR) may be used, and carboxymethyl cellulose or a salt thereof, or the like may be used in combination therewith. The negative electrode plate 12 may be produced by: applying a negative electrode mixture slurry including the negative electrode active material and the binder on each surface of the negative electrode core 40; and compressing the resulting coating film.

Examples of the negative electrode active material included in the negative electrode mixture layer 41 include carbon materials such as graphite that reversibly occlude and release lithium ions. The graphite may be any of natural graphite and artificial graphite. For the negative electrode active material, an element that forms an alloy with Li such as Si and Sn, and a material containing the element may be used. Among them, a composite material containing Si is preferably used. A preferable example of the composite material containing Si includes a material including a fine Si phase dispersed in an SiO₂ phase, a silicate phase such as lithium silicate, a carbon phase, or a silicide phase.

For the separator 13, a porous sheet having ion permeability and an insulation property is used. Specific examples of the porous sheet include a microporous thin film, a woven fabric, and a nonwoven fabric. Suitable examples of a material for the separator 13 include a polyolefin such as polyethylene or polypropylene, or a cellulose. The separator 13 may have either a single-layer structure or a multi-layer structure. The separator 13 may have a high heat resistant resin layer such as aramid resin formed on its surface. At least one of interfaces between the separator 13 and the positive electrode plate 11 and between the separator 13 and the negative electrode plate 12 may have a filler layer that contains an inorganic filler.

Insulating plates 18 and 19 are disposed on the upper and lower sides of the electrode group 14, respectively. In the example illustrated in FIG. 1, a positive electrode tab 20 extends toward the sealing assembly 17 side through a through hole in the insulating plate 18, and the negative electrode tab 21 extends toward the bottom portion side of the outer housing can 16 through the outside of the insulating plate 19. The positive electrode tab 20 is connected to a lower surface of an internal terminal plate 23 of the sealing assembly 17, by means of laser welding or the like, and a cap 27 which is a top plate of the sealing assembly 17 electrically connected to the internal terminal plate 23 serves as a positive electrode terminal. The negative electrode tab 21 is connected to a bottom inner surface of the outer housing can 16, by means of laser welding or the like, and the outer housing can 16 serves as a negative electrode terminal. Each of the positive electrode tab 20 and the negative electrode tab 21 corresponds to a current collecting tab.

The positive electrode tab 20 is joined to the positive electrode core 30, by means of ultrasonic welding, laser welding, or the like. The positive electrode tab 20 is joined to a longitudinal center portion away from both ends of the positive electrode plate 11 in the longitudinal direction, for example. The positive electrode tab 20 may be joined to a position that is substantially equally distant from both ends of the positive electrode plate 11 in the longitudinal direction. The negative electrode tab 21 is joined to the negative electrode core 40, by means of ultrasonic welding, laser welding, or the like. In the example illustrated in FIG. 1, the negative electrode tab 21 is joined to a winding finish side end portion which is an end portion of the negative electrode plate 12 in the longitudinal direction that is located on an outer circumferential side of the electrode group 14. The positive electrode tab 20 and the negative electrode tab 21 each are, for example, a band-shaped metallic member, and have a thickness of greater than or equal to 30 µm and less than or equal to 100 µm. The materials of the positive electrode tab 20 and the negative electrode tab 21 are not limited to particular materials. The positive electrode tab 20 is preferably made of a metal containing aluminum as a main component. The negative electrode tab 21 is preferably made of a metal containing nickel or copper as a main component or a metal containing both of nickel and copper.

On the outer circumferential surface of the electrode group 14, the separator 13 is disposed, but the negative electrode plate 12 may be disposed. In addition, an exposed portion where a surface of the negative electrode core 40 is exposed may be formed on the outer circumferential surface of the electrode group 14, and the exposed portion may contact an inner surface of the outer housing can 16 so that the negative electrode plate 12 and the outer housing can 16 are electrically connected to each other. In this case, the negative electrode plate 12 need not have the negative electrode tab 21.

The outer housing can 16 is a bottomed cylindrical metallic container in which one side in an axial direction is open, as described above. A gasket 28 is provided between the outer housing can 16 and the sealing assembly 17 to achieve the sealability inside the battery and the insulation property between the outer housing can 16 and the sealing assembly 17. The outer housing can 16 has a grooved portion 22, the grooved portion 22 being formed by a part of a side wall projecting inward. The grooved portion 22 is preferably formed in an annular shape along a circumferential direction of the outer housing can 16 and supports the sealing assembly 17 on an upper surface of the grooved portion 22. The sealing assembly 17 is fixed to an upper portion of the outer housing can 16 by the grooved portion 22, and an opening end of the outer housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode group 14 side. Each member constituting the sealing assembly 17 has, for example, a disk shape or a ring shape, and each member except for the insulating member 25 is electrically connected to each other. The lower vent member 24 and the upper vent member 26 are connected to each other at respective center portions, and the insulating member 25 is interposed between the circumferential edge portions of the vent members 24 and 26. If an abnormality occurs in the battery and the internal pressure of the battery increases, the lower vent member 24 is deformed to push up the upper vent member 26 toward the cap 27 side and breaks, resulting in cutting off of a current pathway between the lower vent member 24 and the upper vent member 26. If the internal pressure further increases, the upper vent member 26 breaks, and gas is discharged through an opening of the cap 27.

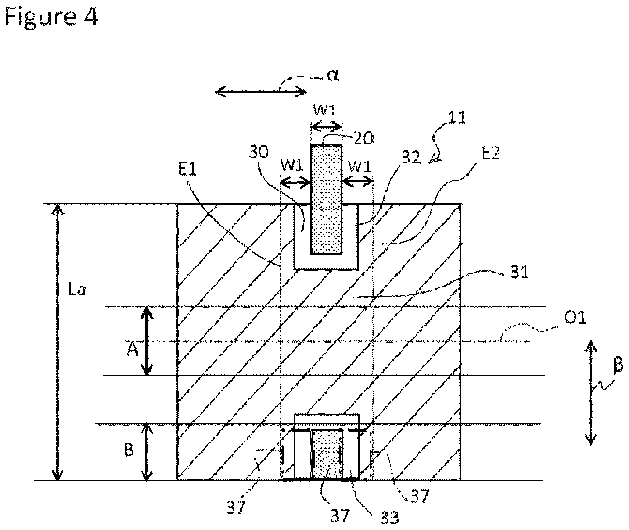

Hereinafter, the positive electrode plate 11 will be described in detail with reference to FIGS. 3 and 4. FIG. 3 is a front view of the positive electrode plate 11, the front view illustrating the positive electrode tab 20 and its vicinity. FIG. 4 is an enlarged view of a longitudinal center portion of the positive electrode plate 11 illustrated in FIG. 3, in which tapes 34 and 35 (FIG. 3) are not illustrated. In each of FIGS. 3 and 4, a mixture layer is indicated by the hatching lines. As described above, the positive electrode plate 11 has the positive electrode core 30, and the positive electrode mixture layer 31 formed on each surface of the positive electrode core 30.

As illustrated in FIG. 3, one side surface of the positive electrode plate 11 has exposed portions 32 and 33 formed in which a surface of the positive electrode core 30 is exposed, on respective both end portions of the positive electrode plate 11 in the width direction (an up-down direction in FIG. 3) in the longitudinal (a left-right direction in FIG. 3) center portion of the positive electrode plate 11. In FIGS. 3 and 4, the longitudinal direction of the positive electrode plate 11 is indicated by an arrow α, and the width direction of the positive electrode plate 11 is indicated by an arrow β. The longitudinal direction of the positive electrode plate 11 corresponding to the winding direction of the electrode group 14, and the width direction of the positive electrode plate 11 corresponds to the winding axis direction of the electrode group 14. Each of the exposed portions 32 and 33 is formed in which a positive electrode mixture slurry is not applied on the positive electrode core 30 so that the positive electrode mixture layer 31 is not provided. Alternatively, each of the exposed portions 32 and 33 may be formed by peeling a part of the positive electrode mixture layer 31. Since the two exposed portions 32 and 33 are thus formed on both end portions of the positive electrode plate 11 in the width direction, in one side surface of the positive electrode plate 11, the positive electrode mixture layer 31 is present between the two exposed portions 32 and 33 to include a center O1 (FIG. 4) of the positive electrode plate 11 in the width direction. Note that the positions where the exposed portions 32 and 33 are formed are not limited to the longitudinal center portion of the positive electrode plate 11, and, for example, the exposed portions 32 and 33 may be formed at a plurality of positions spaced from each other in the longitudinal direction.

The positive electrode plate 11 has one exposed portion of the exposed portions 32 and 33, that is, the positive electrode tab 20 joined to the upper exposed portion 32. The upper exposed portion 32 has dimensions slightly larger than those of a portion where the positive electrode tab 20 and the positive electrode core 30 overlap each other. The positive electrode tab 20 is connected to one end side of the positive electrode core 30 in the width direction and within a range that does not exceed the center O1 in the width direction. This makes it possible to reduce a length of a portion of the positive electrode tab 20 that overlaps with the positive electrode core 30, so that the positive electrode tab 20 can be excluded from a vicinity of a center of the electrode group 14 in the winding axis direction. Therefore, the safety of the battery 10 can be improved.

On the other hand, the other exposed portion of the exposed portions 32 and 33, that is, the lower exposed portion 33 is provided at substantially the same position as the upper exposed portion 32 in relation to the longitudinal direction of the positive electrode plate 11, and provided with substantially the same shape and substantially the same size as the upper exposed portion 32. Note that the exposed portions 32 and 33 may have different shapes and sizes from each other.

The exposed portion 32 preferably includes a first surface to which the positive electrode tab 20 is joined, and a second surface opposite to the first surface. That is, the positive electrode tab 20 is joined to only a surface on one side of the positive electrode core 30, and the exposed portion 32 is formed on a surface on the other side where the positive electrode tab 20 is not disposed. Similarly, the exposed portion 33 preferably includes a first surface on a side to which the positive electrode tab 20 is joined, and a second surface opposite to the first surface. The second surface of each of the exposed portions 32 and 33 is preferably formed to overlap with the positive electrode plate 11 in the thickness direction with substantially the same size as the first surface.

The positive electrode plate 11 has a dummy tab 37 joined to the lower exposed portion 33. The dummy tab 37 is connected to the other end side of the positive electrode core 30 in the width direction and within a range that does not exceed the center O1 in the width direction.

The lengths of the dummy tab 37 in the longitudinal direction and the width direction of the positive electrode plate 11 are preferably substantially the same as the lengths of a portion of the positive electrode tab 20 that overlaps with the positive electrode core 30, in the longitudinal direction and the width direction of the positive electrode plate 11. The thickness of the dummy tab 37 is preferably substantially the same as the thickness of the positive electrode tab 20.

The material of the dummy tab 37 is not limited to a particular material, but is preferably made of the same metal material as the metal material included in the positive electrode tab 20.

The dummy tab 37 is disposed to overlap with a substantially entire portion of the positive electrode tab 20 when the positive electrode plate 11 is viewed in the width direction. This makes it possible to reduce both of the non-uniformity of the thickness and the non-uniformity of the rigidity between both sides of the positive electrode plate 11 in the width direction. This makes it possible to reduce the winding deviation of the positive electrode plate 11 during formation of the electrode group 14. Accordingly, the yield of the battery 10 can be prevented from being deteriorated, so that the battery 10 with improved safety can be efficiently produced.

The configuration of the present disclosure is not limited to the configuration in which the dummy tab 37 is disposed to overlap with a substantially entire portion of the positive electrode tab 20 when the positive electrode plate 11 is viewed in the width direction as in this example. For example, in a case where positions extending outward from both ends of the positive electrode tab 20 in the width direction by a length W1 of the positive electrode tab 20 in the width direction are defined as both ends E1 and E2, the dummy tab 37 indicated by a two-dot chain line as illustrated in FIG. 4 is disposed within an inner range from both ends E1 and E2 in the longitudinal direction of the positive electrode plate 11, so that the dummy tab 37 can overlap with at least a part of the positive electrode tab 20. In this way, it is only required that, when the positive electrode plate 11 is viewed in the width direction, the dummy tab 37 overlaps with at least a part of the positive electrode tab 20.

As illustrated in FIG. 4, the positive electrode tab 20 and the dummy tab 37 are preferably disposed at portions that exclude a range in which a length A in the width direction is 35% of a length La of the positive electrode plate 11 in the width direction, and which has the center O1 of the positive electrode plate 11 in the width direction as a center portion in the width direction. In this case, the length A of the electrode plate in the width direction is A = La × 35/100. This makes it possible to more effectively prevent the positive electrode tab 20 and the dummy tab 37 from piercing the separator 13 or the like, so that the internal short-circuit can be more effectively prevented and the safety of the battery 10 can be further improved.

Corner portions of the outer housing can 16 of the battery 10 have the strength physically resistant to the external stress or impact. On the other hand, a side surface portion of the outer housing can 16 is relatively low in strength, and is a portion susceptible to deformation in the battery 10. In particular, in the outer housing can 16, a portion located below the grooved portion 22 is a portion where the electrode group 14 is housed. A center portion of this portion in the up-down direction is physically easily deformed. In the battery 10, a center of the lower portion in relation to the grooved portion 22 in the up-down direction substantially coincides with the center of the positive electrode plate 11 in the width direction. Therefore, the positive electrode tab 20 and the dummy tab 37 are disposed on portions excluding the center portion of the positive electrode plate 11 in the width direction, so that the internal short-circuit of the battery 10 can be more effectively prevented and thus, the safety of the battery 10 can be further improved. Furthermore, as described above, the positive electrode tab 20 and the dummy tab 37 are disposed at portions that exclude a range in which the length A in the width direction is 35% of the length La of the positive electrode plate 11 in the width direction, and which has the center O1 of the positive electrode plate 11 in the width direction as a center portion in the width direction, so that the above effects can be remarkably obtained.

As illustrated in FIG. 4, at least a part of the dummy tab 37 is preferably disposed inward from a lower end which is the other end of the positive electrode plate 11 in the width direction, within a range in which a length B in the width direction is 20% of the length La of the positive electrode plate 11 in the width direction. In this case, B = La × 20/100. In a case where the dummy tab 37 is thus disposed, a balance of the rigidity of the positive electrode plate 11 in the width direction can be enhanced so that the winding deviation of the positive electrode plate 11 can be greatly reduced during formation of the electrode group 14. This makes it possible to reduce the winding deviation defect of the electrode group 14, so that the yield of the battery 10 can be more effectively prevented from being deteriorated.

In a case of this example, the entire dummy tab 37 is disposed inward from the lower end which is the other end of the positive electrode plate 11 in the electrode plate width direction, within a range in which the length B in the electrode plate width direction is 20% of the length La of the positive electrode plate 11 in the electrode plate width direction. This makes it possible to further enhance the balance of the rigidity of the positive electrode plate 11 in the width direction.

As illustrated in FIG. 3, tapes 34 and 35 that cover the positive electrode tab 20 and the dummy tab 37 are provided on the positive electrode plate 11. The tape 34 preferably covers the positive electrode tab 20, the exposed portion 32, and a region adjacent to the exposed portion 32 of the positive electrode mixture layer 31. The tape 35 preferably covers the dummy tab 37, the exposed portion 33, and a region adjacent to the exposed portion 33 of the positive electrode mixture layer 31. In addition, the tape 34 preferably covers the entirety of the exposed portion 32 including a region where the positive electrode tab 20 is present. The tape 35 preferably covers the entirety of the exposed portion 33 including a region where the dummy tab 37 is present. The tape 34, 35 is formed into a rectangular shape slightly larger than the exposed portion 32, 33, and is provided to extend from the exposed portion 32, 33 of the positive electrode plate 11 in the longitudinal direction and the width direction. The tapes 34 and 35 are preferably provided on both surfaces of the positive electrode core 30.

The tapes 34 and 35 each have, for example, a substrate formed from insulating resin, and an adhesive layer formed on one surface of the substrate. The tape 34 is preferably an insulating tape substantially having no electrical conductivity.

In the above-described embodiment, a case has been described where the two exposed portions 32 and 33 are provided at both end portions of the positive electrode plate 11 in the width direction with a part of the positive electrode mixture layer 31 interposed therebetween, but a configuration may be adopted in which the exposed portions are provided in a strip shape over the entire length of the positive electrode plate 11 in the width direction. Even in this case, the positive electrode tab 20 and the dummy tab 37 are separately provided on both end sides of the positive electrode plate 11 in the width direction, and are connected within a range that does not exceed the center of the positive electrode plate 11 in the width direction.

In this example, a configuration has been described in which the positive electrode tab 20 and the dummy tab 37 are connected on both end sides of the positive electrode plate 11 in the width direction. On the other hand, along with this configuration or instead of this configuration, a configuration may be adopted in which a negative electrode tab and a dummy tab are connected on both end sides of the negative electrode plate 12 in the width direction.

For example, two exposed portions are formed on both end portions of the negative electrode plate 12 in the width direction so that a negative electrode tab is joined to a lower exposed portion which is one exposed portion of the two exposed portions, and a dummy tab is joined to an upper exposed portion which is the other exposed portion.

The negative electrode tab is connected to a lower side which is one end side of the negative electrode core 40 in the width direction and within a range that does not exceed a center of the negative electrode plate 12 in the width direction. The dummy tab is connected to an upper side which is the other end side of the negative electrode core 40 in the electrode plate width direction and within a range that does not exceed the center of the negative electrode plate 12 in the width direction. The dummy tab is disposed to overlap with at least a part of the negative electrode tab when the negative electrode plate 12 is viewed in the width direction. The negative electrode tab is excluded from the vicinity of the center of the electrode group 14 in the winding axis direction, so that the safety of the battery 10 can be improved. This makes it possible to reduce both of the non-uniformity of the thickness and the non-uniformity of the rigidity between both end sides of the negative electrode plate 12 in the width direction. This makes it possible to reduce the winding deviation of the negative electrode plate 12 during formation of the electrode group 14. Accordingly, the yield of the battery 10 can be prevented from being deteriorated, so that the battery 10 with improved safety can be efficiently produced.

In the negative electrode plate 12, a configuration may be adopted in which the negative electrode tab and the dummy tab are disposed at portions that exclude a range in which a length in the width direction is 35% of a length of the negative electrode plate 12 in the width direction, and which is a center portion of the negative electrode plate 12 in the width direction. In the negative electrode plate 12, a configuration may be adopted in which at least a part of the dummy tab is disposed inward from an upper end which is the other end of the negative electrode plate 12 in the width direction, within a range which is 20% of the length of the negative electrode plate 12 in the electrode plate width direction. In the negative electrode plate 12, another configuration is similar to a configuration in which the negative electrode tab and the dummy tab of the negative electrode plate 12 are provided at the winding finish end portion of the negative electrode plate 12 in the positive electrode plate in FIGS. 3 and 4, and the vertical positional relationship between the negative electrode tab and the dummy tab is reversed with respect to the positional relationship between the positive electrode tab 20 and the dummy tab 37 of the positive electrode plate 11 in FIGS. 3 and 4.

Note that a configuration of the negative electrode plate 12 is not limited to the configuration in which the negative electrode tab and the dummy tab are provided at the winding finish end portion of the negative electrode plate 12, and, for example, the negative electrode tab and the dummy tab may be provided at the winding start end portion of the negative electrode plate 12 or on an intermediate portion of the negative electrode plate 12 in the longitudinal direction.

### REFERENCE SIGNS LIST

10 Battery, 11 Positive electrode plate, 12 Negative electrode plate, 13 Separator, 14 Electrode group, 16 Outer housing can, 17 Sealing assembly, 18, 19 Insulating plate, 20 Positive electrode tab, 21 Negative electrode tab, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 32, 33 Exposed portion, 34, 35 Tape, 37 Dummy tab, 40 Negative electrode core, 41 Negative electrode mixture layer.

## Claims

1. A battery, comprising:
an electrode group in which a band-shaped positive electrode plate and a band-shaped negative electrode plate are wound with a separator interposed between the positive electrode plate and the negative electrode plate;
an electrolyte; and
an outer housing can, wherein
at least one electrode plate of the positive electrode plate and the negative electrode plate
has a mixture layer formed on a band-shaped electrode core, and includes, in a width direction of the electrode plate corresponding to a winding axis direction of the electrode group, a current collecting tab connected to one end side of the electrode core and within a range that does not exceed a center of the electrode plate, and a dummy tab connected to the other end side of the electrode core and within a range that does not exceed the center of the electrode plate, and
the dummy tab is disposed to overlap with at least a part of the current collecting tab when the electrode plate is viewed in the width direction.

2. The battery according to claim 1, wherein
the current collecting tab and the dummy tab are disposed at portions that exclude a range which is 35% of a length of the electrode plate in the width direction, and which is a center portion of the electrode plate in the width direction.

3. The battery according to claim 1, wherein
at least a part of the dummy tab is disposed inward from the other end of the electrode plate in the width direction, within a range which is 20% of a length of the electrode plate in the width direction.
